# EUROPEAN PATENT SPECIFICATION

(11) **EP 2 887 727 B1**
(45) Date of publication and mention of the grant of the patent: **13.03.2019**
(21) Application number: 13831390.3
(22) Date of filing: 12.08.2013
(51) Int. Cl.: H04W 4/14, H04W 4/70, H04W 28/02, H04L 12/841

(54) **METHOD AND DEVICE FOR CONGESTION CONTROL**
VERFAHREN UND VORRICHTUNG ZUR ÜBERLASTSTEUERUNG
PROCÉDÉ ET DISPOSITIF DE CONTRÔLE D'ENCOMBREMENT

(30) Priority: 20.08.2012 CN 201210296813
(43) Date of publication of application: 24.06.2015
(73) Proprietor: ZTE Corporation, Shenzhen, Guangdong 518057 (CN)
(72) Inventor: XU, Hui, Shenzhen Guangdong 518057 (CN)
(74) Representative: Mozzi, Matteo
(86) International application number: PCT/CN2013/081286
(87) International publication number: WO 2014/029284

(56) References cited:
- CN-A- 102 238 477
- CN-A- 102 333 293
- CN-A- 102 378 262
- CN-A- 102 427 604
- ZTE: "Overload control on MTC-IWF", 3GPP DRAFT; S2-122848_OVERLOAD CONTROL ON MTC-IWF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Barcelona, Spain; 20120709 - 20120713, 3 July 2012 (2012-07-03), XP050633372, [retrieved on 2012-07-03]
- HTC ET AL: "Solution of overload handling for device triggering", 3GPP DRAFT; S2-123303-(WASS2-123248-S2-122745)_SDDTE_O VERLOAD_HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. SA WG2, no. Barcelona, Spain; 20120709 - 20120713 12 July 2012 (2012-07-12), XP050682996, Retrieved from the Internet: URL:http://www.3gpp.org/ftp/tsg_sa/WG2_Arc h/TSGS2_92_Barcelona/Docs/ [retrieved on 2012-07-12]

## Description

### Field

The present invention relates to the communication field, including, e.g., a congestion control method and device.

### Background

Machine to Machine (M2M) refers to all the technologies and means that are used to establish a connection between machines. The concept of M2M was already proposed in the 1990s but just remained in a theoretical state. Since 2000, with the continuous development of mobile communication technologies, it is possible to establish the Internet of machines using mobile communication technologies. After being put into market around 2002, M2M service has been developed rapidly in the following years and has become the focus of attention of many communication equipment suppliers and telecom operators. At present, the machines on the world outnumber people so significantly that the bright market prospect of M2M technology is predictable.

Researches on application scenarios of M2M communication indicate that the provision of M2M communication on a mobile network has a potential market prospect. However, as M2M service has many new requirements on a system, to enhance the competitiveness of mobile networks in this aspect, it is necessary to optimize existing mobile networks to support M2M communication more effectively.

It is designed mainly for human-to-human communication in the existing mobile communication networks, but it is not optimized enough for machine-to-machine communication or human-to-machine communication. In addition, how to provide communication services at a low cost is also critical to a successful communication deployment.

Based on the situation above, it is necessary to research a solution of a mobile network how to support M2M communication, and the solution is required to maximize the reuse of existing networks so as to reduce the effect caused by a great amount of M2M communication on the networks and decrease the complexity of operation maintenance.

At present, with the competition in the telecommunication market becoming increasingly fierce and the charge on communications getting lower and lower, operators earn less and less profit as a human-orientated communication market is becoming saturated, in this context, M2M becomes a new development opportunity for operators.

To utilize mobile network resources effectively, it is proposed Machine Type Communication (MTC) in the 3rd Generation Partnership Project (3GPP), that is, M2M and Machine-to-Man communication services, the service range of which is highly beyond that of the conventional Human-to-Human (H2H) communications, and which is very different from the existing H2H communication mode in access control, charging, security, Quality of Service (QoS), service mode and other aspects.

MTC Device Trigger (hereinafter referred to as trigger for short) is one of the basic requirements on an MTC system, which is put forward aiming at the following problem: to control the communication of MTC devices, the communication may be implemented sometimes through the poll initiated by an MTC server, and for the communication initiated by the MTC device, sometimes it is also needed to poll data from the MTC device by the MTC server. If the poll of the MTC server is failed or the IP address of the MTC device is unusable, then the MTC server may establish a communication with the MTC device using trigger. If a network cannot trigger the MTC device, then the network reports the failure of the trigger to the MTC server, and the trigger is realized in a 3GPP through a control panel signaling.

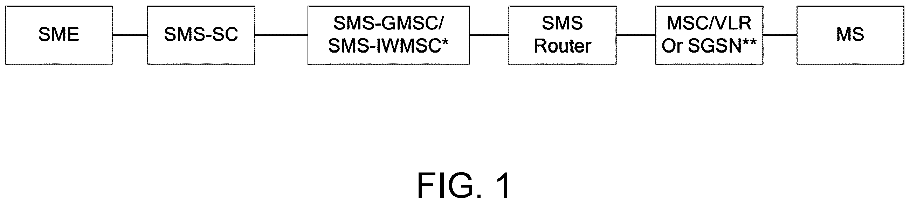

Fig. 1 is a schematic diagram illustrating a network architecture for the sending of a short message according to a related technology, and as shown in Fig. 1, a Short Message Service (SMS) is to send information between a Short Message Entity (SME) and a User Equipment (UE) via a Service Center (SC), and the SMS comprises a Mobile Originated (MO) service and a Mobile Terminating (MT) service, that is, the SMS comprises the UE sends information or the UE receives information.

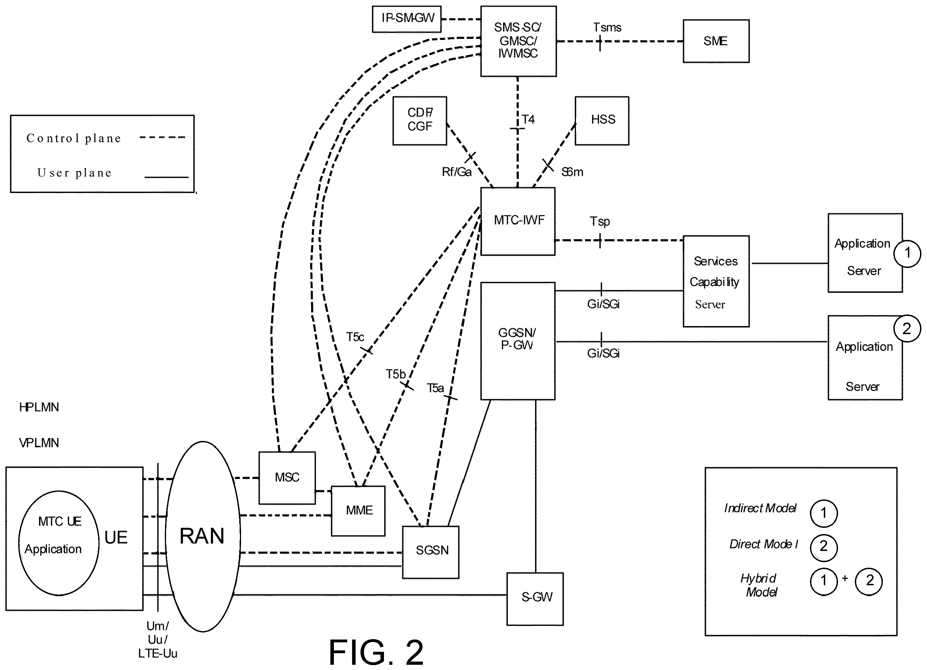

To realize the effective transmission of a trigger request, many solutions have been proposed, including sending the trigger by using an SMS and sending the trigger by using a control panel signaling; Fig. 2 is a schematic diagram illustrating an MTC network architecture in the 3GPP according to a related technology, and as shown in Fig. 2, an MTC InterWorking Function (MTC-IWF) is connected with a Short Message Service-Service Center (SMS-SC) via a T4 interface, and the trigger information received from a Service Capability Server (SCS) is sent to a target MTC User Equipment (UE) in the form of a short message. In the architecture shown in Fig. 2, the MTC-IWF plays the role of an SME to send short message trigger information to the SMS-SC.

In consideration of the fact that the number of MTC UEs is much higher than that of traditional UEs, a network congestion may occur if trigger information is synchronously sent to MTC UEs; to avoid a network congestion caused by the trigger information, it is needed to perform a congestion control on the trigger information. It has been discussed in related art to perform a congestion control on trigger information at Tsp and T5 interfaces, that is, an MTC-IWF and a Mobile Management Entity (MME)/Serving General packet radio service support node (SGSN) perform the congestion control on trigger information, respectively.

However, it is found, during the process of studying and practicing existing technologies, that existing technologies have the following problem: for the sending of trigger information by using an SMS, no effective solution has been proposed as to whether or not it is needed to perform a congestion control by a T4 interface and how to perform a congestion control by the T4 interface.

"Overload control on MTC-IWF" (ZTE, 3GPP DRAFT; S2-122848, 2012-7-13) discloses the solution to the MTC-IWF to control the signalling load caused by MTC service.

"Solution of overload handling for device triggering" (HTC ET AL, 3GPP DRAFT, S2-123303) relates to a solution of overload handling for device triggering enhancement.

### Summary

Aiming at the problem of how to perform a congestion control by a T4 interface existing in related art, congestion control methods and devices are provided to at least solve this problem. The present invention is defined in the appended independent claims to which reference should be made. Advantageous features are set out in the appended dependent claims.

### Brief Description of the Drawings

The accompanying drawings described here are provided for a better understanding of the present invention and constitute one part of the present invention, and the exemplary embodiments of the present invention and description thereof are illustrative of the present invention but are not to be construed as limiting the present invention. In the accompanying drawings:
Fig. 1 is a schematic diagram illustrating a network architecture for the sending of a short message according to a related technology;
Fig. 2 is a schematic diagram illustrating an MTC network architecture in the 3GPP according to a related technology;
Fig. 3 is a flowchart illustrating a congestion control method according to an embodiment of the present invention;
Fig. 4 is a block diagram illustrating the structure of a congestion control device according to an embodiment of the present invention;
Fig. 5 is a block diagram 1 illustrating a preferred structure of a congestion control device according to an embodiment of the present invention;
Fig. 6 is a block diagram 2 illustrating a preferred structure of a congestion control device according to an embodiment of the present invention;
Fig. 7 is a block diagram 3 illustrating a preferred structure of a congestion control device according to an embodiment of the present invention;
Fig. 8 is a flowchart illustrating another congestion control method according to an embodiment of the present invention;
Fig. 9 is a block diagram illustrating the structure of another congestion control device according to an embodiment of the present invention;
Fig. 10 is a block diagram 1 illustrating a preferred structure of another congestion control device according to an embodiment of the present invention;
Fig. 11 is a block diagram 2 illustrating a preferred structure of another congestion control device according to an embodiment of the present invention;
Fig. 12 is a flowchart illustrating a congestion control method according to embodiment 1 of the present invention;
Fig. 13 is a flowchart 1 illustrating a congestion control method according to embodiment 2 of the present invention;
Fig. 14 is a flowchart 2 illustrating a congestion control method according to embodiment 3 of the present invention; and
Fig. 15 is a schematic diagram illustrating the structure of a system for realizing a congestion control at a T4 interface according to embodiment 3 of the present invention.

### Detailed Description of the Embodiments

The present invention is described below in detail with reference to accompanying drawings when read in conjunction with embodiments. It should be noted that embodiments of the present invention and the features thereof can be combined with each other if no conflict is caused.

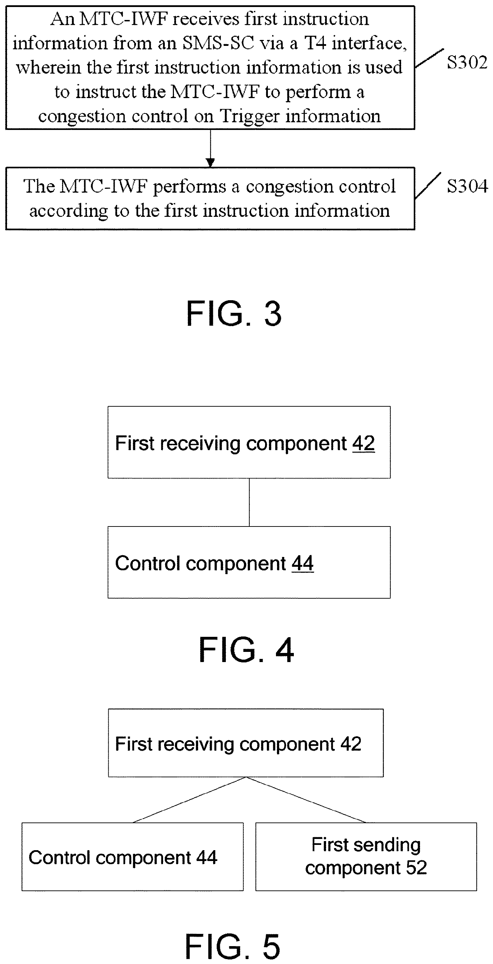

A congestion control method is provided in an embodiment of the present invention, Fig. 3 is a flowchart illustrating the congestion control method according to an embodiment of the present invention, and as shown in Fig. 3, the method comprises the following steps:
S302: an MTC-IWF receives first instruction information from an SMS-SC via a T4 interface, wherein the first instruction information is used to instruct the MTC-IWF to perform a congestion control on Trigger information; and
S304: the MTC-IWF performs a congestion control according to the first instruction information.

By executing the foregoing steps, the MTC-IWF receives the first instruction information from the SMS-SC via a T4 interface and the MTC-IWF performs a congestion control according to the first instruction information. It enables the SMS-SC to instruct the MTC-IWF to perform a congestion control on the Trigger information when a network congestion is found at the T4 interface, thus reducing the amount of the Trigger information which is sent by the MTC-IWF to the SMS-SC via the T4 interface and consequentially addressing the problem of how to perform a congestion control by a T4 interface existing in related art, improving the robustness and the stability of the system and enabling the MTC-IWF and the SMS-SC to perform a congestion control on trigger information when the trigger information is sent via the T4 interface.

According to an embodiment of the present invention, the congestion control may be that the MTC-IWF locally caches the trigger information received from an SCS, and/or the MTC-IWF sends congestion control instruction information to the SCS. It can be carried out to reduce the amount of the Trigger information sent from the SCS to the MTC-IWF.

According to an embodiment of the present invention, the SMS-SC may refer to a Short Message Service-Service Center (SMS-SC) which is located in the same Home Public Land Mobile Network (HPLMN) with the MTC-IWF.

As a preferred embodiment, the SMS-SC receives congestion indication information from a serving node where a UE locates and performs a congestion control on trigger information according to the congestion indication information. Preferably, the serving node may include at least one of: A Mobility Management Entity (MME), a Serving GPRS Support Node (SGSN) and a Mobile Switching Center (MSC).

According to an embodiment of the present invention, the process that the SMS-SC performs a congestion control on the trigger information may include that: the SMS-SC locally caches the trigger information received from the MTC-IWF, and/or the SMS-SC sends the first instruction information to the MTC-IWF.

As a preferred embodiment, in consideration of some important trigger information which needs to be processed preferentially, important trigger information may be set with a relatively high priority. For example, the important trigger information may be set with a priority higher than a preset threshold. When the MTC-IWF receives Trigger information, the MTC-IWF firstly judges whether or not the priority of the Trigger information is higher than the preset threshold, if so, directly sends the Trigger information to the SMS-SC without performing a congestion control on the Trigger information, otherwise, performs a congestion control on the Trigger information, and in the above case, the MTC-IWF may perform a congestion control on the Trigger information according to the first instruction information.

According to an embodiment of the present invention, the MTC-IWF may also send a transmission report to the SCS while performing a congestion control according to the first instruction information, wherein the transmission report may contain information indicating a trigger failure and a trigger failure reason which may be 'the SMS-SC is performing a congestion control'. In this way, the SCS can be informed that the sending of the trigger information is failed due to the SMS-SC is performing a congestion control. Therefore, the sending strategy can be adjusted correspondingly.

According to an embodiment of the present invention, the first instruction information may be a control factor, used for indicating the MTC-IWF to reduce the proportion of the sent Trigger information in the total Trigger information, or a control time, used for indicating how long the MTC-IWF performs the congestion control, or a control type, used for indicating the type of the Trigger information on which the MTC-IWF performs a congestion control, or other instruction information as long as the instruction information is capable of indicating the MTC-IWF how to control the sending of Trigger information.

According to an embodiment of the present invention, since the Trigger information is generally effective within a certain time, the control time may be selected to be shorter than the effective time of the Trigger information so that the Trigger information is not invalidated due to the congestion control.

As a preferred embodiment, after performing a congestion control according to the first instruction information, the MTC-IWF receives second instruction information from the SMS-SC via the T4 interface, wherein the second instruction information is used to instruct the MTC-IWF to release the congestion control. The MTC-IWF may release the congestion control according to the second instruction information to recover a normal Trigger information processing mode. Alternatively, in a case that the first instruction information is a control time, the MTC-IWF may release the congestion control after the control time is up.

A congestion control device is provided in an embodiment of the present invention corresponding to the foregoing congestion control method, which is located in an MTC-IWF to realize the foregoing embodiments and preferred embodiments that have been described and not described here repeatedly. The terms 'module', as used herein, may be the combination of software and/or hardware for achieving predetermined functions. Although the device described in the following embodiments is preferably implemented as software, the implementation of the device as hardware or the combination of software and hardware is also conceivable.

Fig. 4 is a block diagram illustrating the structure of a congestion control device according to an embodiment of the present invention, and as shown in Fig. 4, the device comprises: a first receiving component 42 and a control component 44 which are described below in detail.

The first receiving component 42 is configured to receive first instruction information from an SMS-SC via a T4 interface, wherein the first instruction information is used to instruct the MTC-IWF to perform a congestion control on Trigger information; and the control component 44 connected with the first receiving component 42 is configured to perform the congestion control according to the first instruction information.

With the foregoing modules, the MTC-IWF receives, using the first receiving component 42, congestion control instruction information from the SMS-SC via the T4 interface and performs a congestion control using the control component 44 according to the instruction information so that the SMS-SC can instruct the MTC-IWF to perform a congestion control on Trigger information after a network congestion is found at the T4 interface, thus reducing the amount of the Trigger information sent by the MTC-IWF to the SMS-SC via the T4 interface and consequentially addressing the problem of how to perform a congestion control by a T4 interface existing in related art, improving the robustness and the stability of the system and enabling the MTC-IWF and the SMS-SC to perform a congestion control on trigger information when the trigger information is sent via the T4 interface.

According to an embodiment of the present invention, the control component 44 may include: a first judging element 442, configured to judge whether or not the priority of the Trigger information is higher than a preset threshold; a first sending element 444 connected with the first judging element 442 and configured to send the Trigger information to the SMS-SC based on that the determination result of the first judging element 442 is that the priority of the Trigger information is higher than the preset threshold; and a control element 446 connected with the first judging element 442 and configured to perform a congestion control on the Trigger information according to the first instruction information based on that the determination result of the first judging element 442 is that the priority of the Trigger information is not higher than the preset threshold.

According to an embodiment of the present invention, the control component 44 may further include: a caching element 448 configured to locally cache the trigger information from an SCS according to the first instruction information; and/or a second sending element 450 configured to send congestion control instruction information to the SCS according to the first instruction information.

Fig. 5 is a block diagram 1 illustrating a preferred structure of a congestion control device according to an embodiment of the present invention, and as shown in Fig. 5, the device may further include: a first sending component 52 connected with the first receiving component 42 and configured to send a transmission report to the SCS, wherein the trigger failure reason contained in the transmission report is 'the SMS-SC is performing a congestion control'.

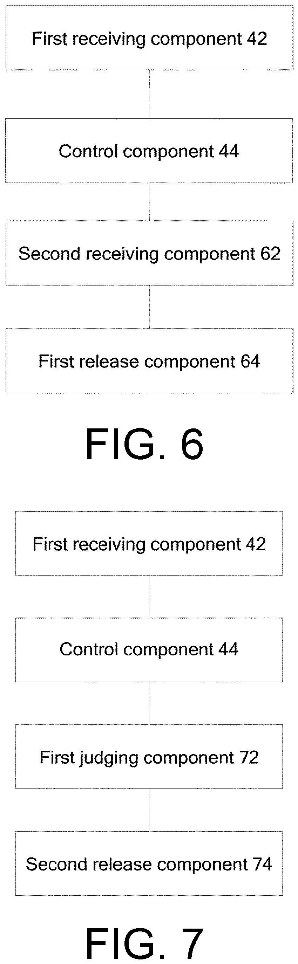

Fig. 6 is a block diagram 2 illustrating a preferred structure of a congestion control device according to an embodiment of the present invention, and as shown in Fig. 6, the device may further include: a second receiving component 62 connected with the control component 44 and configured to receive second instruction information from the SMS-SC via the T4 interface, wherein the second instruction information is used to instruct the MTC-IWF to release the congestion control; and a first release component 64 connected with the second receiving component 62 and configured to release the congestion control according to the second instruction information.

Fig. 7 is a block diagram 3 illustrating a preferred structure of a congestion control device according to an embodiment of the present invention, and as shown in Fig. 7, in a case where the first instruction information comprises the foregoing control time, the device may further include: a first judging component 72 connected with the control component 44 and configured to judge whether or not the control time is up; and a second release component 72 connected with the first judging component 72 and configured to release the congestion control based on that the control time is up.

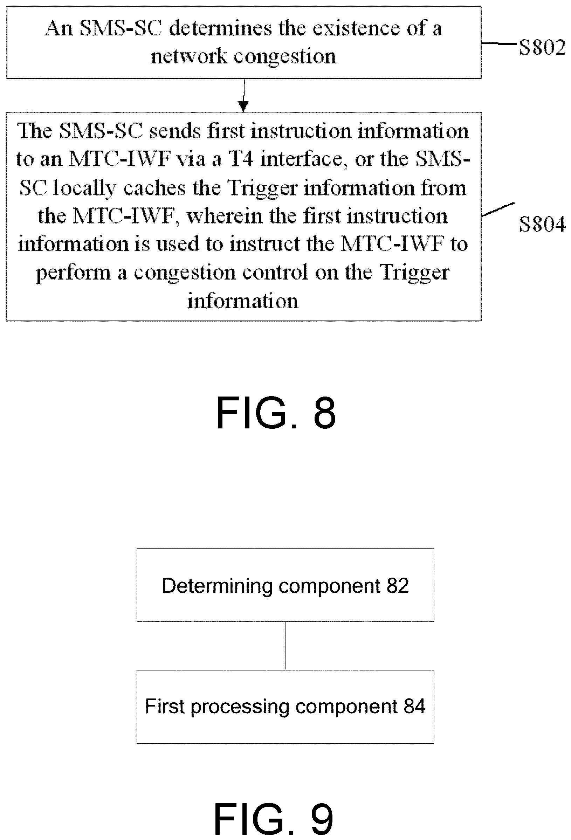

Another congestion control method is also provided in an embodiment of the present invention, Fig. 8 is a flowchart illustrating another congestion control method according to an embodiment of the present invention, and as shown in Fig. 8, the method comprises the following steps:
S802: an SMS-SC determines the existence of a network congestion; and
S804: the SMS-SC sends first instruction information to an MTC-IWF via a T4 interface, or the SMS-SC locally caches the Trigger information from the MTC-IWF, wherein the first instruction information is used to instruct the MTC-IWF to perform a congestion control on the Trigger information.

In the embodiment, by executing the foregoing steps in which an SMS-SC, after determining the existence of a network congestion, sends congestion control instruction information to an upstream MTC-IWF via a T4 interface to instruct the MTC-IWF to perform a congestion control on Trigger information, so that the MTC-IWF can perform a congestion control according to the instruction information to reduce the amount of the Trigger information sent from by MTC-IWF to the SMS-SC via the T4 interface, or the SMS-SC can locally cache the Trigger information from the MTC-IWF, thus addressing the problem of how to perform a congestion control by a T4 interface existing in related art, improving the robustness and the stability of the system and enabling the MTC-IWF and the SMS-SC to perform a congestion control on trigger information when the trigger information is sent via the T4 interface.

Preferably, the SMS-SC can judge whether or not a network is congested according to local information or the congestion indication information received from a serving node where a UE locates. The serving node where a UE locates comprises at least one of: an MME, an SGSN and an MSC.

For example, in consideration of some important trigger information which needs to be processed preferentially, important trigger information may be set with a relatively high priority. For example, the important trigger information may be set with a priority higher than a preset threshold. When the SMS-SC receives Trigger information, the SMS-SC may firstly judge whether or not the priority of the Trigger information is higher than the preset threshold, if so, directly sends the Trigger information to a target MTC-ME without performing a congestion control on the Trigger information, otherwise, the SMS-SC may judge whether or not to process the Trigger information according to the first instruction information.

As a preferred embodiment, after sending the first instruction information to the MTC-IWF via the T4 interface, the SMS-SC may judge whether or not the network congestion is relieved according to the instruction information sent from another network node or local information and if so, the SMS-SC sends second instruction information to the MTC-IWF via the T4 interface, wherein the second instruction information is used to instruct the MTC-IWF to release the congestion control.

Preferably, the first instruction information may be a control factor, used for indicating the MTC-IWF to reduce the proportion of the sent Trigger information in the total Trigger information, or a control time, used for indicating how long the MTC-IWF performs the congestion control, or a control type, used for indicating the type of the Trigger information on which the MTC-IWF performs the congestion control, or other instruction information as long as the instruction information is capable of instructing the MTC-IWF in how to control the sending of Trigger information.

Preferably, since the Trigger information is generally effective within a certain time, the control time may be selected to be shorter than the effective time of the Trigger information so that the Trigger information is not invalidated due to the congestion control.

Another congestion control device is also provided in an embodiment of the present invention corresponding to the foregoing another congestion control method, which is located in an SMS-SC to realize the foregoing embodiments and preferred embodiments that have been described and not described here repeatedly. As used herein, the terms 'module' may be the combination of software and/or hardware for achieving predetermined functions. Although the device described in the following embodiments is preferably implemented as software, the implementation of the device as hardware or the combination of software and hardware is also conceivable.

Fig. 9 is a block diagram illustrating the structure of another congestion control device according to an embodiment of the present invention, and as shown in Fig. 9, the device comprises: a determining component 82 and a first processing component 84 which are described in below in detail.

The determining component 82 is configured to determine the existence of a network congestion; and the first processing component 84 is connected with the determining component 82 and configured to send first instruction information to an MTC-IWF via a T4 interface or locally cache the Trigger information from the MTC-IWF, wherein the first instruction information is used to instruct the MTC-IWF to perform a congestion control on Trigger information.

In the embodiment, with the foregoing modules, after determining the existence of a network congestion using the determining component 82, the SMS-SC sends congestion control instruction information for indicating the MTC-IWF to perform a congestion control on Trigger information to the upstream MTC-IWF via the T4 interface through the first processing component 84, so that the MTC-IWF can perform a congestion control according to the instruction information to reduce the amount of the Trigger information sent by the MTC-IWF to the downstream SMS-SC via the T4 interface, or the SMS-SC can locally cache the Trigger information from the MTC-IWF, thus addressing the problem of how to perform a congestion control by a T4 interface existing in related art, improving the robustness and the stability of the system and enabling the MTC-IWF and the SMS-SC to perform a congestion control on trigger information when the trigger information is sent via the T4 interface.

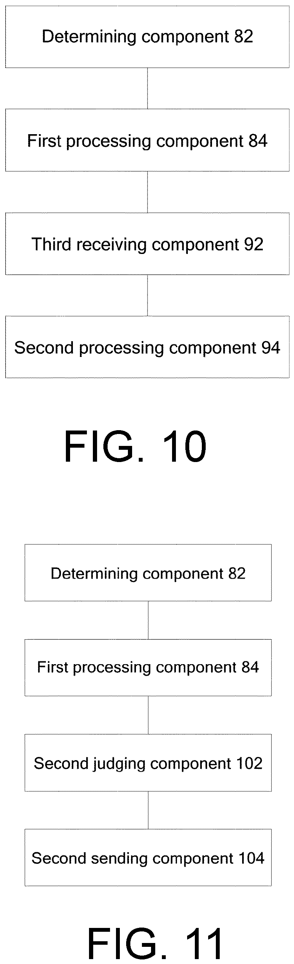

Fig. 10 is a block diagram 1 illustrating a preferred structure of another congestion control device according to an embodiment of the present invention, and as shown in Fig. 10, the device may further include: a third receiving component 92 connected with the first processing component 84 and configured to receive Trigger information from the MTC-IWF and congestion indication information from a serving node where a UE locates, and a second processing component 94 connected with the third receiving component 92 and configured to perform a congestion processing on the Trigger information according to the congestion indication information or local information.

Fig. 11 is a block diagram 2 illustrating a preferred structure of another congestion control device according to an embodiment of the present invention, and as shown in Fig. 11, the device may further include: a second judging component 102 connected with the first processing component 84 and configured to judge whether or not the network congestion is relieved; and a second sending component 104 connected with the second judging component 102 and configured to send second instruction information to the MTC-IWF via the T4 interface based on that the network congestion is relieved, wherein the second instruction information is used to instruct the MTC-IWF to release the congestion control.

The present invention is described below with reference to preferred embodiments which combine the foregoing embodiments and preferred implementation modes thereof.

A method and a system are provided in the following preferred embodiments to perform a congestion control on Trigger information at a T4 interface when the trigger information is sent by using an SMS, wherein the method and system includes that: an SMS-SC sends congestion control instruction information to an MTC-IWF via the T4 interface, and the MTC-IWF performs a congestion control processing on trigger information according to the instruction information. With this scheme, an SMS-SC can perform a congestion control on trigger information when the trigger information is sent via a T4 interface, thus preventing the response of a UE to trigger information from deteriorating a network congestion and limiting the demand of the UE for being triggered in the case of a network congestion.

### Embodiment 1

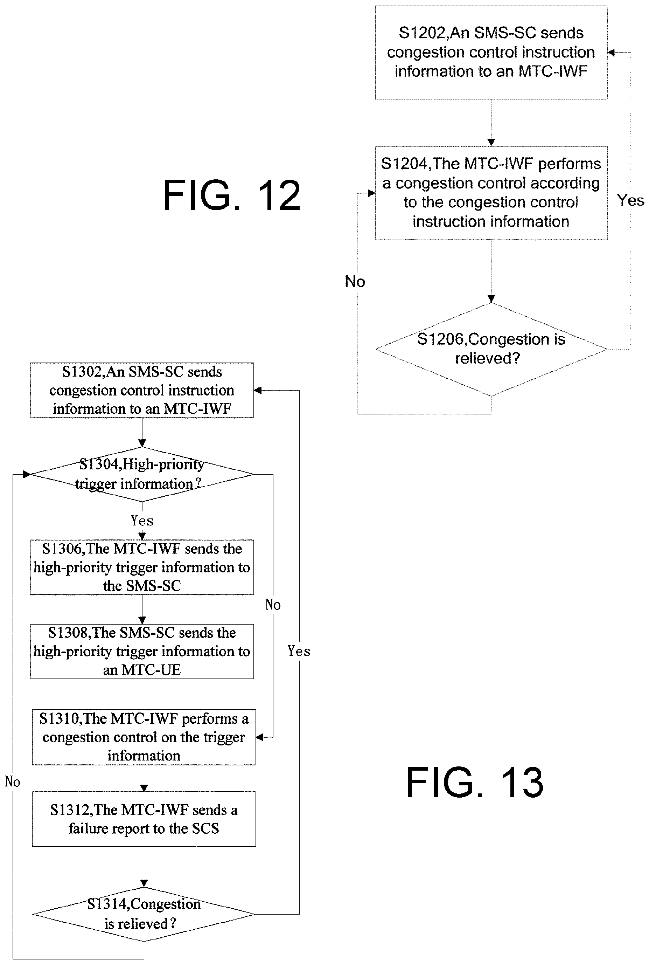

Fig. 12 is a flowchart illustrating a congestion control method according to embodiment 1 of the present invention, and as shown in Fig. 12, the method may include the following steps:
S1202: An SMS-SC sends congestion control instruction information to an MTC-IWF via a T4 interface.

The SMS-SC determines the existence of a congestion in a network; and after receiving network congestion instruction information, the SMS-SC sends the congestion instruction information (that is, the foregoing first instruction information) to the MTC-IWF via the T4 interface.

Wherein the T4 interface may refer to an interface used by the SMS-SC to receive short message trigger information, and the MTC-IWF may refer to an MTC-IWF which sends trigger information to the SMS-SC.

The congestion control instruction information may include one or more of: a control factor, a control time and a control type, wherein the control factor refers to the proportion of the reduced trigger information , for example, 40%, indicating that the SMS-SC expects the MTC-IWF to reduce the sent trigger information by 40%; the control time refers to the length of time of a congestion control; and the control type refers to the type of the trigger information at which a congestion control aims, for example, the priority of the trigger information, the server sending trigger information, and so on;
S1204: The MTC-IWF performs a congestion control according to the congestion control instruction information.

After receiving the congestion control instruction information, the MTC-IWF may perform a processing according to the content of the instruction information, and meanwhile sending a transmission report to an SCS to indicate a trigger failure and a failure reason, wherein the failure reason is 'the SMS-SC is performing a congestion control'. Preferably, the MTC-IWF may further determine whether or not it is needed to perform a congestion control at a Tsp interface; if the MTC-IWF has no storage and forwarding function, then the MTC-IWF may perform a congestion control at the Tsp interface, and the congestion control at the Tsp interface may be carried out according to an existing flow.

It should be noted that high-priority trigger information is free of a congestion control, that is, after receiving the high-priority trigger information, the MTC-IWF sends the high-priority trigger information to the SMS-SC; and
S1206: The SMS-SC judges whether or not the network congestion is relieved, if so, the flow proceeds to S1202, otherwise, the flow proceeds to S1204.

The SMS-SC may judges whether or not the network congestion is relieved according to the instruction information sent from another network node; if the network congestion is relieved, the SMS-SC updates the congestion control instruction information and sends the updated instruction information (that is, the foregoing second instruction information) to the MTC-IWF, otherwise, the MTC-IWF continues the congestion control according to the current instruction information (that is, the foregoing first instruction information).

It should be noted that the SMS-SC can send information indicating the removal of the congestion when the congestion is removed or when a congestion control time is up while normally processing the trigger information sent by the MTC-IWF; generally, the trigger information is limited by an effective time parameter, thus, the congestion control time may be shorter than the effective time.

### Embodiment 2

Fig. 13 is a flowchart 1 illustrating a congestion control method according to embodiment 2 of the present invention, and as shown in Fig. 13, aiming at a scenario where an MTC-IWF has a storage and forwarding function, the congestion control method may include the following steps:
S1302: An SMS-SC sends congestion control instruction information to an MTC-IWF via a T4 interface.

Identical to S1202, this step is not described here repeatedly.

S1304: The MTC-IWF judges whether or not the priority of the trigger information received is a high priority, if so, the flow proceeds to S1306, otherwise, the flow proceeds to S1310.

The trigger information may contain priority information, and the MTC-IWF judges whether or not the priority of the trigger information is a high priority according to the priority information, wherein the priority information is set by an SCS and sent to the MTC-IWF through the trigger information.

S1306: The MTC-IWF sends the high-priority trigger information to the SMS-SC.

The high-priority trigger information is not affected by the congestion control information, that is, after receiving the congestion control information sent by the SMS-SC, the MTC-IWF continues to send high-priority trigger information to the SMS-SC.

S1308: The SMS-SC sends the high-priority trigger information to a target MTC-UE through a short message.

The SMS-SC analyzes the trigger information, determines that the trigger information is high-priority trigger information, and sends the high-priority trigger information to a target MTC-UE in the form of a short message.

S1310: The MTC-IWF performs a congestion control on the trigger information according to the congestion control instruction information.

The MTC-IWF processes the trigger information according to a congestion control parameter received, for example, controls the amount of the trigger information, limits the sending time of the trigger information or limits a specific trigger information type.

It should be noted that the MTC-IWF has a storage and forwarding function, that is, the MTC-IWF locally performs a congestion processing on the trigger information received unless the congestion processing is beyond the storage and forwarding capacity of the MTC-IWF, for example, the MTC-IWF cannot locally store a great mount of trigger information, otherwise, the MTC-IWF generally sends no congestion control information to the SCS.

S1312: The MTC-IWF sends a trigger information transmission failure report to the SCS.

The trigger information transmission failure report contains the reason for the failure, that is, 'the SMS-SC is performing a congestion control'.

It should be noted that if the MTC-IWF sends no congestion control instruction information to the SCS, then the SCS itself can judge whether or not to perform a congestion control on the trigger information.

S1314: The SMS-SC judges whether or not the network congestion is relieved, if so, the flow proceeds to S1302, otherwise, the flow proceeds to S1304.

Identical to S1206, this step is not described here repeatedly.

### Embodiment 3

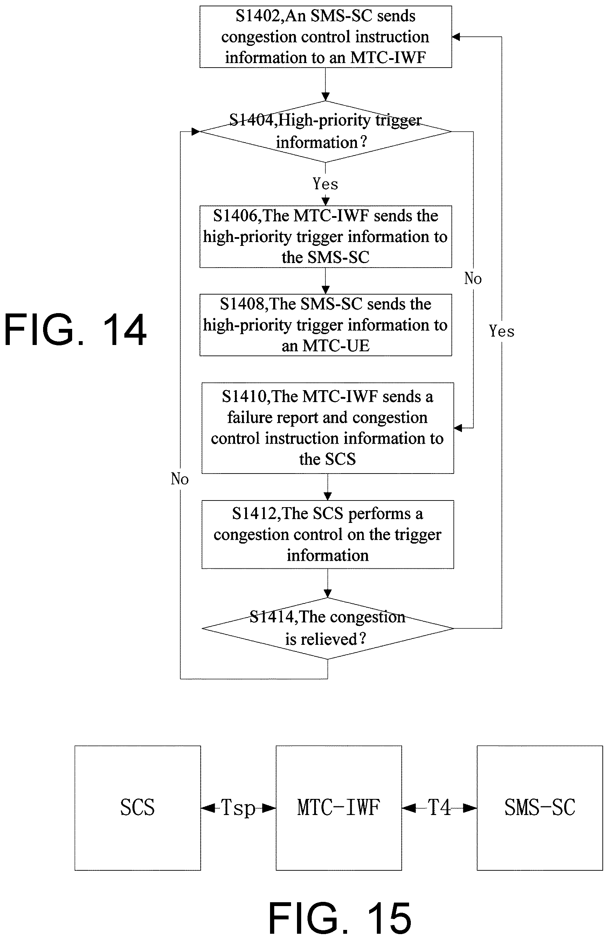

Fig. 14 is a flowchart 2 illustrating a congestion control method according to embodiment 3 of the present invention, and as shown in Fig. 14, aiming at a scenario where an MTC-IWF has no storage and forwarding function, the congestion control method may include the following steps:
S1402: An SMS-SC sends congestion control instruction information to an MTC-IWF via a T4 interface.

Identical to S1302, this step is not described here repeatedly.

S1404: The MTC-IWF judges whether or not the priority of the trigger information received is a high priority, if so, the flow proceeds to S1406, otherwise, the flow proceeds to S1410.

Identical to S1304, this step is not described here repeatedly.

S1406: The MTC-IWF sends the high-priority trigger information to the SMS-SC.

Identical to S1306, this step is not described here repeatedly.

S1408: The SMS-SC sends the high-priority trigger information to a target MTC-UE through a short message.

Identical to S1308, this step is not described here repeatedly.

S1410: The MTC-IWF sends a trigger information transmission failure report to the SCS while sending congestion control instruction information to the SCS.

The failure report contains a failure reason, that is, 'the SMS-SC is performing a congestion control'.

Having no storage and forwarding function, the MTC-IWF can set a congestion control parameter according to the congestion control instruction information received at the T4 interface and sends the congestion control instruction information to the SCS via a Tsp interface.

Step 1412: The SCS performs a congestion control on the trigger information.

The SCS processes the trigger information according to the congestion control parameter received, for example, controls the amount of the trigger information, limits the sending time of the trigger information or limits a specific trigger information type.

S1414: The SMS-SC judges whether or not the network congestion is relieved, if so, the flow proceeds to S1402, otherwise, the flow proceeds to S1404.

Identical to S1314, this step is not described here repeatedly.

Preferably, in order to realize the foregoing method for indicating a message type, a system for realizing a congestion control at a T4 interface is provided in a preferred embodiment of the present invention, Fig. 15 is a schematic diagram illustrating the structure of a system for realizing a congestion control at a T4 interface according to embodiment 3 of the present invention, and as shown in Fig. 15, the system may include:
an SMS-SC (realizing functions of the foregoing SMS-SC), which is configured to perform a congestion control on the trigger information sent by an MTC-IWF, wherein the congestion control includes judging a network congestion condition and sending congestion control instruction information to the MTC-IWF, the SMS-SC, which is also configured to analyze the trigger information received and send the trigger information to a UE.
an MTC-IWF, which is configured to receive the congestion control instruction information sent by the SMS-SC and perform a congestion control on the trigger information according to the instruction information, the MTC-IWF is also configured to send a trigger information transmission failure report and congestion control instruction information to the SCS, determine the priority of the trigger information and judge whether or not to send the trigger information to the SMS-SC according to the priority of the trigger information.
a T4 interface, which is configured to support the transmission of the congestion control instruction information between the SMS-SC and the MTC-IWF.
a Tsp interface, which is configured to support the transmission of a failure report and congestion control instruction information between the MTC-IWF and the SCS; and
an SCS, which is configured to receive the trigger information transmission failure report and perform a congestion control on the trigger information.

Wherein the SMS-SC and the MTC-IWF may further be configured to set a congestion control parameter according to the network congestion condition.

In another embodiment, a piece of software is also provided to execute the technical solutions provided in the foregoing embodiments and preferred embodiments.

In another embodiment, a memory medium is also provided in which the foregoing software is stored and which comprises, but is not limited to: a compact disk, a floppy disk, a hard disk and an erasable memory.

Apparently, it should be appreciated by those skilled in the art that each module or step described in the present invention can be realized by a universal computer and that the modules or steps may be integrated on a single computer or distributed on a network consisting of a plurality of computers, optionally, the modules or steps may be realized by executable program codes so that the modules or steps can be stored in a memory to be executed by a computer, and in some cases, the steps shown or described herein can be executed in a sequence different from this presented herein, or the modules or steps are formed into integrated circuit modules, or several of the modules or steps are formed into integrated circuit modules. Therefore, the present invention is not limited to the combination of specific hardware and software.

The mentioned above is only preferred embodiments of the present invention but not limitation to the present invention, it should be appreciated that various modification and variations can be devised by those of ordinary skill in the art. -Any modification, substitute or improvement devised without departing from the scope of the present invention defined by the appended claims.

## Claims

1. A congestion control method, comprising:
receiving (S302), by a Machine Type Communication InterWorking Function, MTC-IWF, first instruction information from a Short Message Service-Service Center, SMS-SC, via a T4 interface, wherein the first instruction information is used to instruct the MTC-IWF to perform a congestion control on Trigger information, and comprises: a control time, used for indicating how long the MTC-IWF performs the congestion control, the control time is shorter than a time, within the Trigger information is effective, so that the Trigger information is not invalidated due to the congestion control; and
performing (S304), by the MTC-IWF, the congestion control according to the first instruction information.

2. The method according to claim 1, wherein performing (S304), by the MTC-IWF, the congestion control according to the first instruction information comprises:
judging, by the MTC-IWF, whether or not a priority of the Trigger information is higher than a preset threshold;
sending, by the MTC-IWF, the trigger information to the SMS-SC based on that the determination result is that the priority of the Trigger information is higher than the preset threshold; and performing, by the MTC-IWF, a congestion control on the trigger information according to the first instruction information based on that the determination result is that the priority of the Trigger information is not higher than the preset threshold; or,
performing, by the MTC-IWF, the congestion control according to the first instruction information comprises: locally caching, by the MTC-IWF, the trigger information from a Service Capability Server, SCS, according to the first instruction information; and/or sending, by the MTC-IWF, congestion control instruction information to the SCS according to the first instruction information.

3. The method according to claim 1, wherein after the MTC-IWF receives (S302) the first instruction information from the SMS-SC via the T4 interface, the method further comprises:
sending, by the MTC-IWF, a transmission report to the SCS, wherein a trigger failure reason contained in the transmission report is 'the SMS-SC is performing a congestion control', wherein the SMS-SC is an SMS-SC located in the same Home Public Land Mobile Network, HPLMN, with the MTC-IWF; or,
the method further comprises: receiving, by the MTC-IWF, second instruction information from the SMS-SC via the T4 interface, wherein the second instruction information is used to instruct the MTC-IWF to release the congestion control; and releasing, by the MTC-IWF, the congestion control according to the second instruction information.

4. The method according to any one of claims 1 to 3, wherein the first instruction information further comprises at least one of:
a control factor, used for indicating the MTC-IWF to reduce a proportion of the sent Trigger information in a total Trigger information; and
a control type, used for indicating the type of the Trigger information on which the MTC-IWF performs the congestion control.

5. The method according to claim 4, wherein after the SMS-SC sends the first instruction information to the MTC-IWF via the T4 interface, the method further comprises:
determining, by the MTC-IWF, whether or not the control time is up; and
releasing, by the MTC-IWF, the congestion control based on that the control time is up.

6. A congestion control method, comprising:
determining (S802), by a Short Message Service-Service Center, SMS-SC, the existence of a network congestion; and
sending (S804), by the SMS-SC, first instruction information to a Machine Type Communication InterWorking Function, MTC-IWF, via a T4 interface, or locally caching, by the SMS-SC, Trigger information from the MTC-IWF, wherein the first instruction information is used to instruct the MTC-IWF to perform a congestion control on the Trigger information, and comprises: a control time, used for indicating how long the MTC-IWF performs the congestion control, the control time is shorter than a time, within the Trigger information is effective, so that the Trigger information is not invalidated due to the congestion control.

7. The method according to claim 6, wherein determining (S802), by the SMS-SC, the existence of the network congestion comprises:
receiving, by the SMS-SC, congestion indication information from a serving node where a user equipment locates, and determining, by the SMS-SC, the existence of the network congestion according to the congestion indication information or local information, wherein the SMS-SC located in the same Home Public Land Mobile Network, HPLMN, with the MTC-IWF, and the serving node comprises at least one of:
a Mobility Management Entity, MME, a Serving General Packet Radio Service, GPRS, Support Node, SGSN, and a Mobile Switching Center, MSC.

8. The method according to claim 6 or 7, wherein after the SMS-SC sends (S804) the first instruction information to the MTC-IWF via the T4 interface, the method further comprises:
judging, by the SMS-SC, whether or not the network congestion is relieved; and
sending, by the SMS-SC, second instruction information, to the MTC-IWF via the T4 interface based on that the network congestion is relieved, wherein the second instruction information is used to instruct the MTC-IWF to release the congestion control.

9. A congestion control device, located in a Machine Type Communication InterWorking Function, MTC-IWF, comprising:
a first receiving component (42), configured to receive first instruction information from a Short Message Service-Service Center, SMS-SC, via a T4 interface, wherein the first instruction information is used to instruct the MTC-IWF to perform a congestion control on Trigger information, and comprises: a control time, used for indicating how long the MTC-IWF performs the congestion control, the control time is shorter than a time, within the Trigger information is effective, so that the Trigger information is not invalidated due to the congestion control; and
a control component (44), configured to perform the congestion control according to the first instruction information.

10. The device according to claim 9, the control component (44) comprises:
a first judging element, configured to judge whether or not a priority of the Trigger information is higher than a preset threshold;
a first sending element, configured to send the Trigger information to the SMS-SC based on that the determination result of the first judging element is that the priority of the Trigger information is higher than the preset threshold; and
a control element, configured to perform a congestion control on the Trigger information according to the first instruction information based on that the determination result of the first judging element is that the priority of the Trigger information is not higher than the preset threshold; or,
the control component (44) further comprises: a caching element, configured to locally cache the trigger information from a Service Capability Server, SCS, according to the first instruction information; and/or a second sending element, configured to send congestion control instruction information to the SCS according to the first instruction information.

11. The device according to claim 9, the device further comprises: a first sending component (52), configured to send a transmission report to the SCS, wherein a trigger failure reason contained in the transmission report is 'the SMS-SC is performing a congestion control', or,
the device further comprises: a second receiving component (62), configured to receive second instruction information from the SMS-SC via the T4 interface, wherein the second instruction information is used to instruct the MTC-IWF to release the congestion control; and a first release component (64), configured to release the congestion control according to the second instruction information.

12. The device according to claim 9 to 11, the device further comprises:
a first judging component (72), configured to judge whether or not the control time is up; and
a second release component (74), configured to release the congestion control based on that the control time is up.

13. A congestion control device, located in a Short Message Service-Service Center, SMS-SC, comprising:
a determining component (82), configured to determine the existence of a network congestion; and
a first processing component (84), configured to send first instruction information to a Machine Type Communication InterWorking Function, MTC-IWF, via a T4 interface, or locally caches the Trigger information from the MTC-IWF, wherein the first instruction information is used to instruct the MTC-IWF to perform a congestion control on the Trigger information, and comprises: a control time, used for indicating how long the MTC-IWF performs the congestion control, the control time is shorter than a time, within the Trigger information is effective, so that the Trigger information is not invalidated due to the congestion control.

14. The device according to claim 13, further comprising:
a third receiving component (92), configured to receive Trigger information from the MTC-IWF and congestion indication information from a serving node where a user equipment locates; and
a second processing component (94), configured to perform a congestion processing on the Trigger information according to the congestion indication information or local information.

15. The device according to claim 13 or 14, further comprising:
a second judging component (102), configured to judge whether or not the network congestion is relieved; and
a second sending component (104), configured to send second instruction information to the MTC-IWF via the T4 interface based on that the network congestion is relieved, wherein the second instruction information is used to instruct the MTC-IWF to release the congestion control.

## Patentansprüche

1. Überlaststeuerungsverfahren, umfassend:
Empfangen (S302) erster Befehlsinformationen von einem Kurznachrichtendienst-Servicecenter (Message Service-Service Center, SMS-SC) über eine T4-Schnittstelle durch eine Machinentyp-Kommunikationsübergangsfunktion (Machine Type Communication InterWorking Function, MTC-IWF), wobei die ersten Befehlsinformationen dazu dienen, die MTC- IWF anzuweisen, eine Überlaststeuerung an Triggerinformationen durchzuführen, und umfassen: eine Steuerungszeit, die zum Angeben dient, wie lange die MTC-IWF die Überlaststeuerung durchführt, wobei die Steuerungszeit kürzer als eine Zeit ist, innerhalb der die Triggerinformationen wirksam sind, sodass die Triggerinformationen aufgrund der Überlaststeuerung nicht außer Kraft gesetzt werden; und
Durchführen (S304) der Überlaststeuerung gemäß den ersten Befehlsinformationen durch die MTC-IWF.

2. Verfahren nach Anspruch 1, wobei das Durchführen (S304) der Überlaststeuerung gemäß den ersten Befehlsinformationen durch die MTC-IWF umfasst:
Beurteilen, ob eine Priorität der Triggerinformationen höher als ein voreingestellter Schwellenwert ist, durch die MTC-IWF;
Senden der Triggerinformationen an das SMS-SC auf der Grundlage, dass das Ermittlungsergebnis darin besteht, dass die Priorität der Triggerinformationen höher als der voreingestellte Schwellenwert ist, durch die MTC-IWF; und Durchführen einer Überlaststeuerung an den Triggerinformationen gemäß den ersten Befehlsinformationen auf der Grundlage, dass das Ermittlungsergebnis darin besteht, dass die Priorität der Triggerinformationen nicht höher als der voreingestellte Schwellenwert ist, durch die MTC-IWF; oder
wobei das Durchführen der Überlaststeuerung gemäß den ersten Befehlsinformationen durch die MTC-IWF umfasst: lokales Zwischenspeichern der Triggerinformationen von einem Service Capability Server (SCS) durch die MTC-IWF gemäß den ersten Befehlsinformationen; und/oder Senden von Überlaststeuerungs-Befehlsinformationen durch die MTC-IWF an den SCS gemäß den ersten Befehlsinformationen.

3. Verfahren nach Anspruch 1, wobei das Verfahren, nachdem die MTC-IWF die ersten Befehlsinformationen vom SMS-SC über die T4-Schnittstelle empfangen hat (S302), ferner umfasst:
Senden eines Übertragungsberichts durch die MTC-IWF an den SCS, wobei ein im Übertragungsbericht enthaltener Triggerfehlergrund lautet "SMS-SC führt gerade eine Überlaststeuerung aus", wobei es sich bei dem SMS-SC um ein SMS-SC handelt, das sich im selben öffentlichen terrestrischen Mobilfunknetz (Home Public Land Mobile Network, HPLMN) wie die MTC-IWF befindet; oder
das Verfahren ferner umfasst: Empfangen zweiter Befehlsinformationen vom SMS-SC über die T4-Schnittstelle durch die MTC-IWF, wobei die zweiten Befehlsinformationen dazu dienen, die MTC-IWF anzuweisen, die Überlaststeuerung freizugeben; und Freigeben der Überlaststeuerung gemäß den zweiten Befehlsinformationen durch die MTC-IWF.

4. Verfahren nach einem der Ansprüche 1 bis 3, wobei die ersten Befehlsinformationen mindestens eine umfassen aus:
einem Steuerungsfaktor, der dazu dient, der MTC-IWF anzuzeigen, einen Anteil der gesendeten Triggerinformationen in einer Gesamt-Triggerinformation zu verringern; und
einem Steuerungstyp, der dazu dient, den Typ der Triggerinformationen anzugeben, an denen die MTC-IWF die Überlaststeuerung durchführt.

5. Verfahren nach Anspruch 4, wobei das Verfahren, nachdem das SMS-SC die ersten Befehlsinformationen über die T4-Schnittstelle an die MTC-IWF gesendet hat, ferner umfasst:
Ermitteln durch die MTC-IWF, ob die Steuerungszeit abgelaufen ist; und
Freigeben der Überlaststeuerung durch die MTC-IWF auf der Grundlage, dass die Steuerungszeit abgelaufen ist.

6. Überlaststeuerungsverfahren, umfassend:
Ermitteln (S802) des Vorliegens einer Netzüberlast durch ein Kurznachrichtendienst-Servicezentrum (Message Service-Service Center, SMS-SC); und
Senden (S804) erster Befehlsinformationen an eine Machinentyp-Kommunikationsübergangsfunktion (Machine Type Communication InterWorking Function, MTC-IWF) über eine T4-Schnittstelle durch das SMS-SC oder lokales Zwischenspeichern von Triggerinformationen von der MTC-IWF durch das SMS-SC, wobei die ersten Befehlsinformationen dazu dienen, die MTC-IWF anzuweisen, eine Überlaststeuerung an den Triggerinformationen durchzuführen, und umfassen: eine Steuerungszeit, die zum Angeben dient, wie lange die MTC-IWF die Überlaststeuerung durchführt, wobei die Steuerungszeit kürzer als eine Zeit ist, innerhalb der die Triggerinformationen wirksam sind, sodass die Triggerinformationen aufgrund der Überlaststeuerung nicht außer Kraft gesetzt werden.

7. Verfahren nach Anspruch 6, wobei das Ermitteln (S802) des Vorliegens der Netzüberlast durch das SMS-SC umfasst:
Empfangen von Überlastanzeigeinformationen von einem bedienenden Knoten, bei dem sich ein Benutzergerät befindet, durch das SMS-SC und Ermitteln des Vorliegens der Netzüberlast gemäß den Überlastanzeigeinformationen oder lokalen Informationen durch das SMS-SC, wobei sich das SMS-SC im selben öffentlichen terrestrischen Mobilfunknetz (Home Public Land Mobile Network, HPLMN) wie die MTC-IWF befindet und der bedienende Knoten mindestens eines umfasst aus:
einer Mobilitätsmanagementeinheit (Mobility Management Entity, MME), einem bedienenden GPRS-Support-Node (SGSN) (GPRS = General Packet Radio Service, allgemeiner paketvermittelter Funkdienst) und einem Mobilfunkvermittlungszentrum (Mobile Switching Center, MSC).

8. Verfahren nach Anspruch 6 oder 7, wobei das Verfahren, nachdem das SMS-SC die ersten Befehlsinformationen über die T4-Schnittstelle an die MTC-IWF gesendet hat (S804), ferner umfasst:
Beurteilen durch das SMS-SC, ob die Netzüberlast abgemildert wurde; und
Senden zweiter Befehlsinformationen durch das SMS-SC an die MTC-IWF über die T4-Schnittstelle auf der Grundlage, dass die Netzüberlast abgemildert wurde, wobei die zweiten Befehlsinformationen dazu dienen, die MTC-IWF anzuweisen, die Überlaststeuerung freizugeben.

9. Überlaststeuerungsvorrichtung, die sich in einer Machinentyp-Kommunikationsübergangsfunktion (Machine Type Communication InterWorking Function, MTC-IWF) befindet, umfassend:
eine erste Empfangskomponente (42), die dazu konfiguriert ist, über eine T4-Schnittstelle erste Befehlsinformationen von einem Kurznachrichtendienst-Servicezentrum (Message Service-Service Center, SMS-SC) zu empfangen, wobei die ersten Befehlsinformationen dazu dienen, die MTC-IWF anzuweisen, eine Überlaststeuerung an Triggerinformationen durchzuführen, und umfassen: eine Steuerungszeit, die zum Angeben dient, wie lange die MTC-IWF die Überlaststeuerung durchführt, wobei die Steuerungszeit kürzer als eine Zeit ist, innerhalb der die Triggerinformationen wirksam sind, sodass die Triggerinformationen aufgrund der Überlaststeuerung nicht außer Kraft gesetzt werden; und
eine Steuerungskomponente (44), die dazu konfiguriert ist, die Überlaststeuerung gemäß den ersten Befehlsinformationen durchzuführen.

10. Vorrichtung nach Anspruch 9, wobei die Steuerungskomponente (44) umfasst:
ein erstes Beurteilungselement, das dazu konfiguriert ist, zu beurteilen, ob eine Priorität der Triggerinformationen höher als ein voreingestellter Schwellenwert ist;
ein erstes Sendeelement, das dazu konfiguriert ist, die Triggerinformationen an das SMS-SC auf der Grundlage dessen zu senden, dass das Ermittlungsergebnis des ersten Beurteilungselements darin besteht, dass die Priorität der Triggerinformationen höher als der voreingestellte Schwellenwert ist; und
ein Steuerungselement, das dazu konfiguriert ist, eine Überlaststeuerung der Triggerinformationen gemäß den ersten Befehlsinformationen auf der Grundlage dessen durchzuführen, dass das Ermittlungsergebnis des ersten Beurteilungselements darin besteht, dass die Priorität der Triggerinformationen nicht höher als der voreingestellte Schwellenwert ist; oder
die Steuerungskomponente (44) ferner umfasst: ein Zwischenspeicherungselement, das dazu konfiguriert ist, die Triggerinformationen von einem Dienstfähigkeitsserver (Service Capability Server, SCS) gemäß den ersten Befehlsinformationen lokal zwischenzuspeichern; und/oder ein zweites Sendeelement, das dazu konfiguriert ist, gemäß den ersten Befehlsinformationen Überlaststeuerungs-Befehlsinformationen an den SCS zu senden.

11. Vorrichtung nach Anspruch 9,
wobei die Vorrichtung ferner umfasst: eine erste Sendekomponente (52), die dazu konfiguriert ist, einen Übertragungsbericht an den SCS zu senden, wobei ein im Übertragungsbericht enthaltener Triggerfehlergrund lautet "SMS-SC führt gerade eine Überlaststeuerung aus", oder
wobei die Vorrichtung ferner umfasst: eine zweite Empfangskomponente (62), die dazu konfiguriert ist, zweite Befehlsinformationen vom SMS-SC über die T4-Schnittstelle zu empfangen, wobei die zweiten Befehlsinformationen dazu dienen, die MTC-IWF anzuweisen, die Überlaststeuerung freizugeben; und eine erste Freigabekomponente (64), die dazu konfiguriert ist, die Überlaststeuerung gemäß den zweiten Befehlsinformationen freizugeben.

12. Vorrichtung nach Anspruch 9 bis 11, wobei die Vorrichtung ferner umfasst:
eine erste Beurteilungskomponente (72), die dazu konfiguriert ist, zu beurteilen, ob die Steuerungszeit abgelaufen ist; und
eine zweite Freigabekomponente (74), die dazu konfiguriert ist, die Überlaststeuerung auf der Grundlage dessen freizugeben, dass die Steuerungszeit abgelaufen ist.

13. Überlaststeuerungsvorrichtung, die sich in einem Kurzmitteilungsdienst-Servicezentrum (Message Service-Service Center, SMS-SC) befindet, umfassend:
eine Ermittlungskomponente (82), die dazu konfiguriert ist, das Vorliegen einer Netzüberlast zu ermitteln; und
eine erste Verarbeitungskomponente (84), die dazu konfiguriert ist, erste Befehlsinformationen über eine T4-Schnittstelle an eine Machinentyp-Kommunikationsübergangsfunktion (Machine Type Communication InterWorking Function, MTC-IWF) zu senden oder die Triggerinformationen von der MTC-IWF lokal zwischenzuspeichern, wobei die ersten Befehlsinformationen dazu dienen, die MTC-IWF anzuweisen, eine Überlaststeuerung an den Triggerinformationen durchzuführen, und umfassen: eine Steuerungszeit, die zum Angeben dient, wie lange die MTC-IWF die Überlaststeuerung durchführt, wobei die Steuerungszeit kürzer als eine Zeit ist, innerhalb der die Triggerinformationen wirksam sind, sodass die Triggerinformationen aufgrund der Überlaststeuerung nicht außer Kraft gesetzt werden.

14. Vorrichtung nach Anspruch 13, ferner umfassend:
eine dritte Empfangskomponente (92), die dazu konfiguriert ist, Triggerinformationen von der MTC-IWF und Überlastanzeigeinformationen von einem bedienenden Knoten zu empfangen, bei dem sich ein Benutzergerät befindet; und
eine zweite Verarbeitungskomponente (94), die dazu konfiguriert ist, eine Überlastverarbeitung an den Triggerinformationen gemäß den Überlastanzeigeinformationen oder lokalen Informationen durchzuführen.

15. Vorrichtung nach Anspruch 13 oder 14, ferner umfassend:
eine zweite Beurteilungskomponente (102), die dazu konfiguriert ist, zu beurteilen, ob die Netzüberlast abgemildert wurde; und
eine zweite Sendekomponente (104), die dazu konfiguriert ist, auf der Grundlage dessen, dass die Netzüberlast abgemildert wurde, zweite Befehlsinformationen über die T4-Schnittstelle an die MTC-IWF zu senden, wobei die zweiten Befehlsinformationen dazu dienen, die MTC-IWF anzuweisen, die Überlaststeuerung freizugeben.

## Revendications

1. Procédé de contrôle d'encombrement, comprenant :
la réception (S302), par une fonction d'inter-opérabilité de communication de type machine , MTC-IWF, des premières informations d'instruction provenant d'un centre de service-service de messages courts, SMS-SC, via une interface T4, les premières informations d'instruction servant à charger la MTC-IWF d'effectuer un contrôle d'encombrement sur des informations de déclencheur et comprenant : un temps de contrôle, utilisé pour indiquer la durée pendant laquelle la MTC-IWF effectue le contrôle d'encombrement, le temps de contrôle étant plus court qu'un temps pendant lequel les informations de déclencheur sont efficaces, afin que les informations de déclencheur ne soient pas invalidées à cause du contrôle d'encombrement ; et
la réalisation (S304), par la MTC-IWF, du contrôle d'encombrement en fonction des premières informations d'instruction.

2. Procédé selon la revendication 1, dans lequel l'exécution (S304) par la MTC-IWF, du contrôle d'encombrement selon les premières informations d'instruction consiste à :
déterminer, par la MTC-IWF, si une priorité des informations de déclencheur est supérieure ou non à un seuil prédéfini ;
envoyer, par la MTC-IWF, les informations de déclencheur au SMS-SC en fonction du résultat de la détermination qui est que la priorité des informations de déclencheur est supérieure au seuil prédéfini ; et effectuer, par la MTC-IWF, un contrôle d'encombrement sur les informations de déclencheur en fonction des premières informations d'instruction en se basant sur le fait que le résultat de la détermination est que la priorité des informations de déclencheur n'est pas supérieure au seuil prédéfini ; ou,
l'exécution, par la MTC-IWF, du contrôle d'encombrement en fonction des premières informations d'instruction comprend : la mise en cache locale, par la MTC-IWF, des informations de déclencheur provenant d'un serveur de capacité de service, SCS, en fonction des premières informations d'instruction ; et/ou l'envoi, par la MTC-IWF, d'informations d'instruction de contrôle d'encombrement au SCS, conformément aux premières informations d'instruction.

3. Procédé selon la revendication 1, dans lequel, après que la MTC-IWF a reçu (S302) les premières informations d'instruction du SMS-SC via l'interface T4, le procédé comprend en outre :
l'envoi, par la MTC-IWF, d'un rapport de transmission au SCS, un motif d'échec de déclencheur contenu dans le rapport de transmission étant « le SMS-SC effectue un contrôle d'encombrement », le SMS-SC étant un SMS-SC situé dans le même réseau mobile terrestre public de départ, HPLMN que la MTC-IWF ; ou,
le procédé comprend en outre les étapes consistant à : recevoir, par la MTC-IWF, des secondes informations d'instruction du SMS-SC via l'interface T4, les secondes informations d'instruction servant à ordonner à la MTC-IWF de déclencher le contrôle d'encombrement ; et déclencher, par la MTC-IWF, le contrôle d'encombrement, conformément aux secondes informations d'instruction.

4. Procédé selon l'une quelconque des revendications 1 à 3, dans lequel les premières informations d'instruction comprennent en outre au moins un élément parmi :
un facteur de contrôle, utilisé pour indiquer à la MTC-IWF de réduire une partie des informations de déclencheur envoyées dans un ensemble d'informations de déclencheur ; et
un type de contrôle, utilisé pour indiquer le type d'informations de déclencheur sur lequel la MTC-IWF effectue le contrôle d'encombrement.

5. Procédé selon la revendication 4, dans lequel, après que le SMS-SC a envoyé les premières informations d'instruction à la MTC-IWF via l'interface T4, le procédé comprend en outre les étapes consistant à :
déterminer, par la MTC-IWF, si le temps de contrôle est écoulé ou non ; et
déclencher, par la MTC-IWF, le contrôle d'encombrement en fonction du fait que le temps de contrôle est écoulé.

6. Procédé de contrôle d'encombrement, comprenant :
déterminer (S802), par un centre de service-service de messages courts, SMS-SC, l'existence d'un encombrement du réseau ; et
envoyer (S804), par le SMS-SC, des premières informations d'instruction à une fonction d'inter-opérabilité de communication de type machine, MTC-IWF, via une interface T4, ou mettre en cache de manière locale, par le SMS-SC, des informations de déclencheur provenant de la MTC-IWF, les premières informations d'instruction servant à indiquer à la MTC-IWF d'effectuer un contrôle d'encombrement sur les informations de déclencheur et comprenant : un temps de contrôle, utilisé pour indiquer la durée pendant laquelle la MTC-IWF effectue le contrôle d'encombrement, le temps de contrôle étant plus court qu'un temps pendant lequel les informations de déclencheur sont efficaces, afin que les informations de déclencheur ne soient pas invalidées à cause du contrôle d'encombrement.

7. Procédé selon la revendication 6, dans lequel la détermination (S802), par le SMS-SC, de l'existence de l'encombrement du réseau comprend les étapes consistant à :
recevoir, par le SMS-SC, des informations d'indication d'encombrement provenant d'un noeud de desserte où se trouve un équipement utilisateur et déterminer, par le SMS-SC, l'existence d'un encombrement du réseau en fonction des informations d'indication d'encombrement ou des informations locales, le SMS-SC étant situé dans le même réseau mobile terrestre public de départ, HPLMN que la MTC-IWF et le noeud de desserte comprenant au moins l'un des éléments suivants :
une entité de gestion de la mobilité, MME, un service général de radiocommunication par paquet de desserte, GPRS, un noeud de support, SGSN et un centre de commutation mobile, MSG.

8. Procédé selon la revendication 6 ou 7, dans lequel, après que le SMS-SC a envoyé (S804) les premières informations d'instruction à la MTC-IWF via l'interface T4, le procédé comprend en outre les étapes consistant à :
évaluer, par le SMS-SC, si l'encombrement du réseau est terminé ou non ; et
envoyer, par le SMS-SC, des secondes informations d'instruction, à la MTC-IWF via l'interface T4 en fonction de la cessation de l'encombrement du réseau, les secondes informations d'instruction servant à ordonner à la MTC-IWF de déclencher le contrôle d'encombrement.

9. Dispositif de contrôle d'encombrement, situé dans une fonction d'inter-opérabilité de communication de type machine, MTC-IWF, comprenant :
un premier composant récepteur (42), conçu pour recevoir les premières informations d'instruction d'un centre de service-service de messages courts, SMS-SC, via une interface T4, les premières informations d'instruction servant à charger la MTC-IWF d'effectuer un contrôle d'encombrement sur des informations de déclencheur et comprenant : un temps de contrôle, servant à indiquer la durée pendant laquelle la MTC-IWF effectue le contrôle d'encombrement, le temps de contrôle étant plus court qu'un temps pendant lequel les informations de déclencheur sont efficaces, pour que les informations de déclencheur ne soient pas invalidées à cause du contrôle d'encombrement ; et
un composant de contrôle (44), conçu pour effectuer le contrôle d'encombrement en fonction des premières informations d'instruction.

10. Dispositif selon la revendication 9, le composant de contrôle (44) comprend :
un premier élément d'évaluation, conçu pour déterminer si une priorité des informations de déclencheur est supérieure ou non à un seuil prédéfini ;
un premier élément d'envoi, conçu pour envoyer les informations de déclencheur au SMS-SC en fonction du fait que le résultat de la détermination du premier élément d'évaluation est que la priorité des informations de déclencheur est supérieure au seuil prédéfini ; et
un élément de contrôle, conçu pour effectuer un contrôle d'encombrement sur les informations de déclencheur en fonction des premières informations d'instruction en fonction du fait que le résultat de la détermination du premier élément d'évaluation est que la priorité des informations de déclencheur ne dépasse pas le seuil prédéfini ; ou,
le composant de contrôle (44) comprend en outre : un élément de mise en cache, conçu pour mettre en cache localement les informations de déclencheur provenant d'un serveur de capacité de service, SCS, conformément aux premières informations d'instruction ; et/ou un second élément d'envoi, conçu pour envoyer des informations d'instruction de contrôle d'encombrement au SCS en fonction des premières informations d'instruction.

11. Dispositif selon la revendication 9,
le dispositif comprenant en outre : un premier composant d'envoi (52), conçu pour envoyer un rapport de transmission au SCS, un motif d'échec de déclencheur contenu dans le rapport de transmission étant « le SMS-SC exécute un contrôle d'encombrement » ou
le dispositif comprend en outre : un deuxième composant récepteur (62), conçu pour recevoir des secondes informations d'instruction du SMS-SC via l'interface T4, les secondes informations d'instruction servant à ordonner à la MTC-IWF de déclencher le contrôle d'encombrement ; et un premier composant de déclenchement (64), conçu pour déclencher le contrôle d'encombrement en fonction des secondes informations d'instruction.

12. Dispositif selon les revendications 9 à 11, le dispositif comprend en outre :
un premier composant d'évaluation (72), conçu pour évaluer si le temps de contrôle est écoulé ou non ; et
un second composant de déclenchement (74), conçu pour déclencher le contrôle d'encombrement en fonction du fait que le temps de contrôle est écoulé.

13. Dispositif de contrôle d'encombrement, situé dans un centre de service-service de messages courts, SMS-SC, comprenant :
un composant de détermination (82), conçu pour déterminer l'existence d'un encombrement du réseau ; et
un premier composant de traitement (84), conçu pour envoyer des premières informations d'instruction à une fonction d'inter-opérabilité de communication de type machine, MTC-IWF, via une interface T4 ou pour mettre en cache localement des informations de déclencheur provenant de la MTC-IWF, les premières informations d'instruction servant à ordonner à la MTC-IWF d'effectuer un contrôle d'encombrement sur les informations de déclencheur et comprenant : un temps de contrôle, servant à indiquer la durée pendant laquelle la MTC-IWF effectue le contrôle d'encombrement, le temps de contrôle étant plus court que le temps pendant lequel les informations de déclencheur sont efficaces, afin que les informations de déclencheur ne soient pas invalidées à cause du contrôle d'encombrement.

14. Dispositif selon la revendication 13, comportant en outre :
un troisième composant récepteur (92), conçu pour recevoir des informations de déclencheur provenant de la MTC-IWF et des informations d'indication d'encombrement provenant d'un noeud de desserte sur lequel se trouve un équipement d'utilisateur ; et
un second composant de traitement (94), conçu pour effectuer un traitement d'encombrement sur les informations de déclencheur en fonction des informations d'indication d'encombrement ou d'informations locales.

15. Dispositif selon la revendication 13 ou 14, comprenant en outre :
un second composant d'évaluation (102), conçu pour évaluer si l'encombrement du réseau est terminé ou non ; et
un second composant d'envoi (104), conçu pour envoyer des secondes informations d'instruction à la MTC-IWF via l'interface T4 en fonction de la cessation de l'encombrement du réseau, les secondes informations d'instruction servant à ordonner à la MTC-IWF de déclencher le contrôle d'encombrement.
